# EUROPÄISCHE PATENTSCHRIFT

(11) **EP 1 478 950 B1**
(45) Veröffentlichungstag und Bekanntmachung des Hinweises auf die Patenterteilung: **24.08.2016**
(21) Anmeldenummer: 03704235.5
(22) Anmeldetag: 21.01.2003
(51) Int. Cl.: G01V 3/15

(54) **MESSGERÄT MIT INTEGRIERTER BEDIENUNGSANLEITUNG**
MEASURING APPLIANCE COMPRISING INTEGRATED OPERATING INSTRUCTIONS
APPAREIL DE MESURE AVEC MODE D'EMPLOI INTÉGRÉ

(30) Priorität: 21.02.2002 DE 10207477
(43) Veröffentlichungstag der Anmeldung: 24.11.2004
(73) Patentinhaber: ROBERT BOSCH GMBH, 70442 Stuttgart (DE)
(72) Erfinder: HOFFMANN, Erhard, 70771 Leinfelden-Echterdingen (DE); CLAUSS, Stefan, 70771 Leinfelden-Echterdingen (DE); SKULTETY-BETZ, Uwe, 70771 Leinfelden-Echterdingen (DE); HAASE, Bjoern, 70182 Stuttgart (DE); HOFFMANN, Ulli, 75223 Nieffern-Oeschelbronn (DE)
(86) Internationale Anmeldenummer: PCT/DE2003/000158
(87) Internationale Veröffentlichungsnummer: WO 2003/073133

(56) Entgegenhaltungen:
- EP-A- 0 324 600
- EP-A- 0 336 656
- EP-A- 0 913 674
- US-A- 4 682 158
- US-A- 5 786 696
- US-A- 6 140 819
- US-B1- 6 216 539

## Beschreibung

Die Erfindung betrifft ein Meßgerät, insbesondere ein handgehaltenes Ortungsgerät zur Detektion von Einschlüssen in beispielsweise Wänden, Decken und/oder Böden.

Ein solches Meßgerät weist typischerweise mindestens eine Sensorvorrichtung mit Mitteln zur Erzeugung eines Detektionssignals auf. Ferner ist eine Steuer- und Auswerteeinheit zur Ermittlung von Meßwerten aus dem Detektionssignal der Sensorvorrichtung vorgesehen, die über entsprechende Schaltmittel zur Bedienung des Gerätes aktiviert werden kann. Die erzielten Messergebnisse werden über eine Ausgabevorrichtung eines solchen Meßgerätes angezeigt.

### Stand der Technik

Aufgrund der stark gestiegenen Möglichkeiten und Komplexität heutiger elektronischer Geräte erschließt sich dem Anwender die Funktion eines solchen Gerätes nicht mehr intuitiv. Vielmehr ist oft eine aufwendige Unterweisung des Anwenders in den korrekten Nutzungsablauf eines solchen Gerätes erforderlich.

Eine nicht korrekte Nutzung des Gerätes kann zu einer Fehlfunktion mit nachfolgender Beschädigung des Gerätes oder sogar zu einer irreparablen Zerstörung des Gerätes führen.

Heutzutage erfolgt die notwendige Unterweisung eines potentiellen Anwenders zumeist in Form einer gedruckten Bedienungsanleitung, die dem Produkt beigelegt ist. Diese separaten Bedienungsanleitungen haben, neben ihrer häufig mangelhaften Qualität, den Nachteil, dass diese nicht oder zu spät gelesen werden, verloren gehen oder gerade nicht zur Hand sind, wenn sie benötigt werden. Eine persönliche Einweisung und Schulung jedes potentiellen Anwenders ist schon allein aus organisatorischen und finanziellen Gründen nur in den seltensten Fällen möglich.

Beispielhaft für ein anspruchsvolles, elektronisches Gerät sei die Klasse der Meßgeräte, insbesondere Ortungsgeräte zum Detektieren von eingeschlossenen Gegenständen, wie Elektroleitungen, Wasserrohre oder Amierungen, in Wänden, Fußböden oder Decken angeführt. Derartige Geräte sind aufgrund der anspruchsvollen Technik für den Anwender, speziell, wenn es sich bei diesem um keinen Fachmann handelt, schwierig zu bedienen, so dass eine Vielzahl von Fehlern auftreten können, die nicht erkannt werden und somit das Meßergebnis drastisch beeinflussen und verfälschen können. Das Resultat einer solchen Fehlmessung ist zumindest ein unzufriedener Kunde, wenn nicht gar beträchtlicher Sachschaden, der aus der Fehlfunktion beziehungsweise Fehlmessung eines solchen Gerätes resultiert.

Bei einem bekannten Ortungsgerät für Wandeinschlüsse (Model Ferroscan der Firma Hilti) wird dem Benutzer per Grafik in einem Display angezeigt, welche Stellen einer Wand er zu gegebenem Zeitpunkt eines Meßablaufs abzuscannen hat.

Aus der EP-A-0324600 ist ein großes, stationäres HF-Messgerät in Form eines sogenannten "Spectrum Analysers" mit einer Ausgabeeinheit in Form einer Kathodenstrahl Röhre bekannt. Das Messsystem der EP-A-0324600 besitzt zudem ein externes Speichermedium. Das Gerät der EP-A-0324600 gestattet die Bedienung in Form von "soft-keys", die mittels der Ausgabeeinheit darstellbar sind. Ein Nutzer der Messvorrichtung kann über "soft-key"-Menues die gewünschen Testkonfigurationen des Gerätes aufrufen.

Die EP-A-0913674 zeigt ein stationäres, zweiteiliges Messsystem in Form eines Spektralfotometers. Die Vorrichtung der EP-A-0913674 ist mit einem externen Rechner verbunden und besitzt eine Ein-/Ausgabeeinheit zur manuellen Bedienung und zur Anzeige von Messergebnissen und Benutzerinformationen. Die Benutzerinformationen bestehen dabei im Wesentlichen aus aufgearbeiteten Messdatenprotokollen, die über den externen Rechner des Systems oder einen Internetbrowser erstellt und wiedergegeben werden können.

Die EP-A-0336656, zeigt - ähnlich wie die bereits erwähnte EP-A-0324600 - ein stationäres Messgerät in Form eines elektronischen Testgerätes für Signalmessungen bei Hochfrequenz-Systemen und dazugehörigen Komponenten. Die Vorrichtung der EP-A-0336656 besitzt insbesondere die Möglichkeit einen Testablauf zur HF-Vermessung elektronischer Komponenten mittels "soft-keys" festzulegen, d.h. zu programmieren.

Aus der US 5,786,696A ist ein Metallsuchgerät bekannt, bei dem ein tellerförmiger induktiver Sensor über den Untergrund verschwenkt wird. Dieser tellerförmige Sensor ist über ein Gestänge mit einem Gehäuse verbunden, welches eine Auswerteelektronik und eine Ausgabeeinheit aufweist. Über die Ausgabeeinheit des Gerätes der US 5,786,696A kann beispielsweise die Tiefe eines georteten Gegenstandes angezeigt werden, indem eine von sechs vorhandenen Tiefenmarkierungen beleuchtet wird. Jedes Symbol entspricht dabei einem Tiefenzuwachs von 2 inch. Ebenso besitzt die Ausgabeeinheit dieser Vorrichtung eine Größenausgabe für das aufgefundene Objekt, indem eins von fünf möglichen Größensymbolen aktiviert wird, um die relative Größe eines aufgefundenen Objektes anzuzeigen. Über eine Armstütze kann das Gerät gehalten und über den Untergrund verschwenkt werden. Ein handgehaltenes Ortungsgerät zur Detektion von im Boden verlegten Rohren und Kabeln mit optischer Richtungsanzeige wird in US6140819 beschrieben.

### Aufgabe der Erfindung

Aufgabe der vorliegenden Erfindung ist es, eine Möglichkeit zu realisieren, den Anwendern von Geräten mit komplexem Bedienablauf durch die Bereitstellung vom Hilfmitteln in die Lage zu versetzen, das entsprechende Gerät allzeit sicher zu bedienen.

### Vorteile der Erfindung

Das erfindungsgemäße Messgerät weist neben einer Sensorvorrichtung, Mitteln zur Erzeugung eines Detektionssignals für diese Sensorvorrichtung sowie einer Steuer- und Auswerteeinheit zur Ermittlung von Meßwerten aus dem Detektionssignal eine Ausgabevorrichtung auf, die über Schaltmittel bedient werden kann. Ferner weist das Meßgerät Mittel auf, die es ermöglichen, dass eine Bedienungsanleitung über das Gerät abrufbar und darstellbar ist. In vorteilhafter Weise werden diese Informationen über die bereits vorhandene Ausgabevorrichtung des Meßgerätes wiedergegeben.

Durch die in den weiteren Ansprüchen aufgeführten Merkmale sind vorteilhafte Weiterbildungen und Verbesserungen des in Anspruch 1 angegebenen Messgerätes möglich.

Neben einer reinen Bedienungsanleitung im klassischen Sinne lassen sich mit dem erfindungsgemäßen Messgerät in vorteilhafter Weise über die Ausgabevorrichtung des Gerätes insbesondere auch Bedienhinweise in Form einer kontextsensitiven Benutzerführung, beispielsweise über nachfolgend durchzuführende Meßschritte, abrufen.

Im erfindungsgemäßen Meßgerät ist eine "Online-Bedienungsanleitung" abgelegt, die den Anwender beispielsweise direkt nach dem Einschalten des Gerätes oder aber auch erst auf Anforderung durch den Anwender über die korrekte Bedienung des Gerätes informiert.

Ergänzend beziehungsweise alternativ zur reinen Bedienungsanleitung kann der Anwender situationsabhängig Informationen über den jeweils nächsten, erforderlichen Bedienschritt für eine bestimmte Messung, den aktuellen Zustand des Gerätes, beispielsweise das Vorliegen einer hinreichenden Betriebsspannung für das Gerät, oder auch erfolgte Fehlbedienungen abfragen, die über die Ausgabevorrichtung des Messgerätes wiedergegeben werden. Die kontextsensitive Benutzerführung im Rahmen einer erweiterten Bedienungsanleitung erlaubt es darüber hinaus, das das Gerät auch eigenständig derartige Informationen anzeigt, und damit einen Anwender auf einen möglichen Fehler hinweist.

Besonders einfach und vorteilhaft läßt sich eine derartige "Online-Bedienungsanleitung" beziehungsweise die "Benutzerführung" realisieren, wenn das betreffende Gerät über eine optische Anzeige zur Wiedergabe von Messergebnissen verfügt.

Die Wiedergabe von Informationen an den Anwender kann in einfachen, verständlichen Grafiken oder auch in sogenannten Animationen oder Filmsequenzen erfolgen. Ein grafisches LCD als Ausgabevorrichtung des erfindungsgemäßen Meßgerätes hat zudem den Vorteil, dass auch die vom Meßgerät ermittelten Messwerte in grafischer Weise dargestellt und übermittelt werden können. Dies ermöglicht die Wiedergabe einer Vielzahl von Informationen, ohne dass die Wiedergabe unübersichtlich oder verwirrend und daher für den Anwender unvorteilhaft wird.
Werden ausschließlich Grafiken, Symbole und Animationen für eine "Online-Bedienungsanleitung" beziehungsweise die "Benutzerführung" verwendet, so kann die Wiedergabe dieser Hinweise und Informationen über die Ausgabevorrichtung des erfindungsgemäßen Meßgerätes sprachenneutral realisiert werden. In vorteilhafter Weise kann so auf mehrere Sprachversionen, wie sie beispielsweise bei gedruckten Bedienungsanleitungen üblich sind, verzichtet werden.

Ein beabsichtigter und vorteilhafter Nebeneffekt ist die Tatsache, das ein Anwender des erfindungsgemäßen Meßgerätes sich zwangsläufig mit der korrekten Bedienung des benutzten Gerätes auseinandersetzen muss und die Bedienungsanleitung nicht mehr einfach ignorieren kann.

In vorteilhafter Weise führt die Integration der Bedienungsanleitung in das Gerät dazu, dass die Bedienungsanleitung im Anwendungsfall immer und sofort zur Verfügung steht. Ein Verlust der Bedienungsanleitung ist nicht mehr möglich. Weiterführende Informationen über das Gerät und seine Möglichkeiten können unter entsprechenden Stichworten in einem Speichermedium angelegt sein und beispielsweise in Form von einzelnen Kurzfilmen über das Display und die Bedienelemente des Gerätes abgefragt werden oder aber auch automatisch eingespielt werden.

Insbesondere ermöglicht eine menügesteuerte Wiedergabe der Informationen auf dem Display des erfindungsgemäßen Messgerätes dem Anwender direkt vor Ort und zeitnah zur eigentlichen Messung auftretende Fragen und Probleme zur Messung zu klären, so dass eine längere Unterbrechung des eigentlichen Messvorganges zum Studium einer separaten Bedienungsanleitung des Gerätes nicht mehr notwendig ist.

Zusätzlich wird die Gefahr von Fehlbedienungen eines solchen, technisch anspruchsvollen Gerätes verringert, da der Anwender kontextsensitiv über anstehende Interaktionen beziehungsweise über aufgetretene Fehler oder auch die Möglichkeit eines sich einstellenden Fehlers informiert wird und somit Schritt für Schritt zu einer erfolgreichen Anwendung auch komplexer Meßaufgaben geführt werden kann.

Das erfindungsgemäße Meßgerät ermöglicht es dem Anwender des Gerätes selbst bei komplexen Bedienungsabläufen das entsprechende Gerät sicher und korrekt zu bedienen und verspricht damit Bedienfreundlichkeit, Zuverlässigkeit und nicht zuletzt auch die Möglichkeit einer erhöhten Lebensdauer eines solchen Gerätes.

### Zeichnung

In der Zeichnung ist ein Ausführungsbeispiel eines erfindungsgemäßen Meßgerätes dargestellt, das in der nachfolgenden Beschreibung näher erläutert werden soll. Die Figuren der Zeichnung, deren Beschreibung sowie die auf das erfmdungsgemäße Meßgerät gerichteten Ansprüche enthalten zahlreiche Merkmale in Kombination. Ein Fachmann wird diese Merkmale auch einzeln betrachten und so zu weiteren sinnvollen Kombinationen zusammenfassen.

Es zeigen:
- Fig. 1: eine schematische Darstellung eines erfindungsgemäßen Meßgerätes in einer Aufsicht,
- Fig. 2: eine Wiedergabe der Anzeige eines typischen Meßergebnisses auf dem Display des erfindungsgemäßen Meßgerätes gemäß Fig.1,
- Fig. 3: ein Einzelbild der über das Display des erfindungsgemäßen Meßgerätes wiedergegebenen Bedienungsanleitung des Gerätes,
- Fig. 4: eine weitere Abbildung aus der Bedienungsanleitung des erfindungsgemäßen Meßgerätes, wie sie über das Display des Gerätes wiedergegeben wird,
- Fig. 5: ein Blockschaltbild eines erfindungsgemäßen Messgerätes,
- Fig. 6: ein Einzelbild aus einer animierten Filmsequenz zur Kalibrierung des Messgerätes, wie sie über das Display des Gerätes darstellbar ist,
- Fig. 7: ein weiteres Einzelbild aus der animierten Filmsequenz zur kontextsensitiven Benutzerführung "Kalibrierung des Meßgerätes",
- Fig. 8: das Schlußbild der animierten Filmsequenz zur Kalibrierung des Meßgerätes, wie es auf dem Display des erfindungsgemäßen Gerätes darstellbar ist,
- Fig. 9: ein Einzelbild aus einer animierten Filmsequenz "Messen mit dem Gerät", wie sie über das Display des Gerätes darstellbar ist,
- Fig. 10: ein nachfolgendes Einzelbild aus der animierten Filmsequenz zur kontextsensitiven Benutzerführung "Messen mit dem Gerät",
- Fig. 11: ein weiteres, späteres Einzelbild aus der animierten Filmsequenz zur kontextsensitiven Benutzerführung "Messen mit dem Gerät",
- Fig. 12: ein weiteres, noch späteres Einzelbild aus der animierten Filmsequenz zur kontextsensitiven Benutzerführung "Messen mit dem Gerät",
- Fig. 13: ein auf dem Displays des erfindungsgemäßen Meßgerätes darstellbares Einzelbild zur Information des Anwenders über einen aufgetretenen Meßfehler,
- Fig. 14: ein auf dem Displays des erfindungsgemäßen Meßgerätes darstellbares Einzelbild zur Information des Anwenders über einen aufgetretenen weiteren Meßfehler,
- Fig. 15: ein auf dem Displays des erfindungsgemäßen Meßgerätes darstellbares Einzelbild zur Information des Anwenders über das Ansteigen der vorliegenden Temperatur über den zulässigen Temperaturbereich hinaus,
- Fig. 16: ein auf dem Displays des erfindungsgemäßen Meßgerätes darstellbares Einzelbild zur Information des Anwenders über das Vorliegen von äußeren Störeinflüssen auf den momentanen Meßvorgang informiert.

### Beschreibung eines Ausführungsbeispiels

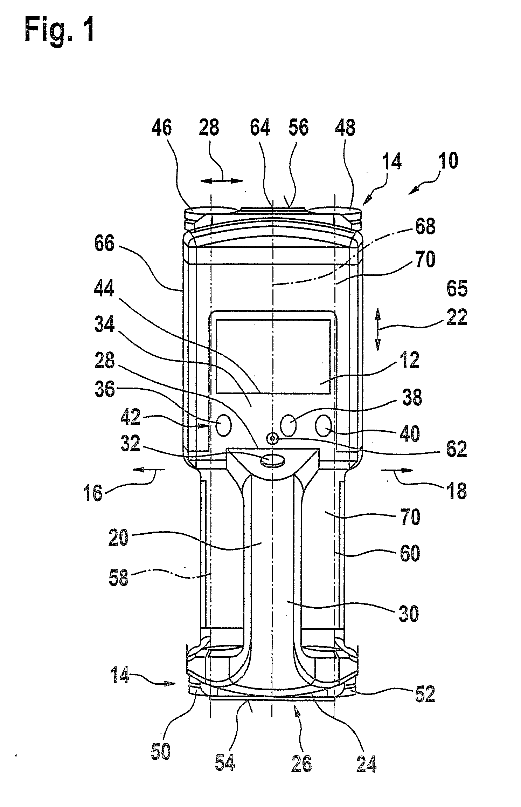

Fig. 1 zeigt den prinzipiellen Aufbau eines erfindungsgemäßen Meßgerätes in einer schematischen Aufsicht. Das Meßgerät gemäß dem in Figur 1 dargestellten Ausführungsbeispiel weist ein Gehäuse 10 auf, welches eine Meßvorrichtung, beispielsweise zur Ortung von eingeschlossenen Objekten in Wänden, Decken und/oder Böden umschließt. In das Gehäuse 10 integriert ist eine Ausgabevorrichtung für Meßergebnisse, die im dargestellten Ausführungsbeispiel als optisches Display 12 ausgeführt ist. Das optische Display 12 steht über eine nicht weiter dargestellte Steuer- und Auswerteeinheit des Meßgerätes, die sich ebenfalls im Inneren des Gehäuses 10 befindet mit einer Sensorvorrichtung des Meßgerätes in Verbindung. Auf dem optischen Display 12 können somit Meßergebnisse des Gerätes insbesondere in graphischer Weise angezeigt werden.

Ferner weist das erfindungsgemäße Meßgerät ein Fahrwerk 14 auf, das es ermöglicht das Gehäuse 10 des erfindungsgemäßen Meßgerätes in zwei bevorzugte, entgegengesetzte Bewegungsrichtungen 16 beziehungsweise 18 zu verfahren. An seiner Oberseite besitzt das Messgerät neben dem optischen Display 12 eine Haltevorrichtung in Form eines bügelförmigen Griffs 20, der in Längserstreckung 22 des Gehäuses 10 verläuft und symmetrisch ist zu einer Ebene, die von einer Längsmittelachse 68 und von einer Normalen 62 der Oberseite 70 des Meßgerätes aufgespannt wird.

Der Griff 20 weist eine sich in Richtung der Oberseite 70 verjüngende, diamantförmige Querschnittsfläche auf und geht mit einem ersten Ende 24 das in Längserstreckung 22 des Gehäuses 10 zu einem Endbereich 26 des Gehäuses 10 weist, in das Gehäuse 10 über. Der bügelförmige Griff 20 der Halteeinheit des erfindungsgemäßen Meßgerätes mündet mit einem zweiten Ende 28 an der Oberfläche 70 des Gehäuses 10. Der Griff 20 ragt mit seiner Bügelform über die Oberfläche 70 des Meßgerätes hinaus und bildet auf diese Art einen Überrollbügel zum Schutz des optischen Displays 12 vor Beschädigungen.

An seinem zweiten Ende 28 weist der Griff 20 in Längserstreckung 22 in Richtung des optischen Displays 12 nach einer Haltefläche 30, die im zentralen Teil des bügelförmigen Griffs 20 ausgebildet ist, ein erstes Bedienelement 32 auf. Nach dem bügelförmigen Griff 20 ist in Längserstreckung 22 des Gehäuses 10 in Richtung des optischen Displays 12, welches ein LCD-Bildschirm, beispielsweise ein Farbbildschirm oder auch ein monochromatischer Bildschirm sein kann, ein Bedienfeld 34 mit drei Bedienelementen 36, 38, 40 angeordnet. Die Bedienelemente 32, 36, 38 und 40 sind derart in einem Bereich 42 zwischen dem zweiten Ende 28 des bügelförmigen Griffes 20 und einer Unterkante 44 des optischen Displays 12 angeordnet, dass ein Bediener mit einer Hand, das Meßgerät über den Griff 20 führen und gleichzeitig die Bedienelemente 32, 36, 38 und 40 mit seinem Daumen bedienen kann.

Das Meßgerät besitzt in der Ausführungsform nach Fig. 1 vier Räder 46, 48, 50 und 52, die in Längserstreckung 22 an gegenüberliegenden Stirnseiten 54 bzw. 56, in Quererstreckung 28 im äußeren Bereich des Gehäuses angeordnet sind. Die sich Längserstreckung 22 jeweils gegenüberliegenden Räder 46, 50 bzw. 48, 52 sind über starre Achsen 58 bzw. 60 drehfest miteinander verbunden und bilden einen Teil des Fahrwerkes 14 für das Gehäuse 10 des Messgerätes.

Mit Hilfe der Räder 46, 48, 50 und 52 kann das erfindungsgemäße Meßgerät unter Zuhilfenahme des Griffs 20 vom Anwender in zwei unterschiedlichen Richtungen 16 bzw. 18 über einen zu untersuchenden Gegenstand verfahren werden. Die Räder 46,48, 50 und 52 bzw. die die Räder koppelnden Achsen 58 bzw. 60 sind über eine Sensoreinheit im Inneren des Gehäuses mit einer Vorrichtung zum Erfassen von Bewegungskenngrößen verbunden. Diese Vorrichtung nimmt Bewegungsinformationen des Meßgerätes auf und leitet diese zu einer Steuer- und Auswerteeinheit des Meßgerätes weiter, in der die Informationen der Bewegungskenngrößen zusammen mit dem gemessenen Detektionssignal des Meßgerätes weiterverarbeitet werden. Die Bewegungskenngrößen die mit dem erfindungsgemäßen Meßgerät aufgenommen werden, sind u.a. die Verschieberichtung des Gerätes und der Betrag des zurückgelegten Weges.

Auch ein Abheben eines oder mehrerer Räder von dem zu untersuchenden Objekt wird über die Sensoren beim Erfassen der Bewegungskenngrößen erkannt und weitergeleitet, so dass eine Fehlmessung, die durch ein unsachgemäßes Verfahren des Meßgerätes auf dem zu untersuchenden Objekt resultiert, erkannt wird. Eine solche unsachgemäße Handhabung des Meßgerätes kann dann erfindungsgemäß über das optische Display 12 dem Anwender in noch zu beschreibender Weise mitgeteilt werden.

Fig. 1 zeigt als Ausführungsbeispiel des erfindungsgemäßen Meßgerätes ein handgehaltenes Ortungsgerät zur Detektion von Einschlüssen in Wänden, Decken und/oder Böden. Für den Meßvorgang wird das erfindungsgemäße Meßgerät mit dem Handgriff 20 der am Gehäuse 10 des Meßgerätes ausgebildet ist an beispielsweise eine Wand gedrückt und über die Räder 46, 48, 50 und 52 in eine gewählte Bewegungsrichtung, beispielsweise Richtung 16 verfahren.

Das erfindungsgemäße Meßgerät erlaubt eine Darstellung der Meßergebnisse in Echtzeit, so dass während das Meßgerät noch über die Wand verfahren wird, im optischen Display 12 des Meßgerätes die Meßergebnisse dargestellt werden. Das Gerät bzw. das optische Display 12 im Gehäuse 10 des Gerätes stellt die untersuchte Wand nicht in einer Durchsicht, sondern im Querschnitt dar. Die Anzeige eines solchen Schnittbildes erfolgt bereits während der Abtastung der Wand und wird laufend aktualisiert, so dass das auf dem optischen Display 12 dargestellte Schnittbild jederzeit der aktuellen Position des Meßgerätes entspricht. Dies erleichtert dem Benutzer die Zuordnung der Positionen von Objekten der Schnittbilder in der Darstellung des optischen Display 12 zu den tatsächlichen Position der zugrundeliegenden, georteten Objekte in einem Untersuchungsgegenstand, beispielsweise in einer Gebäudewand.

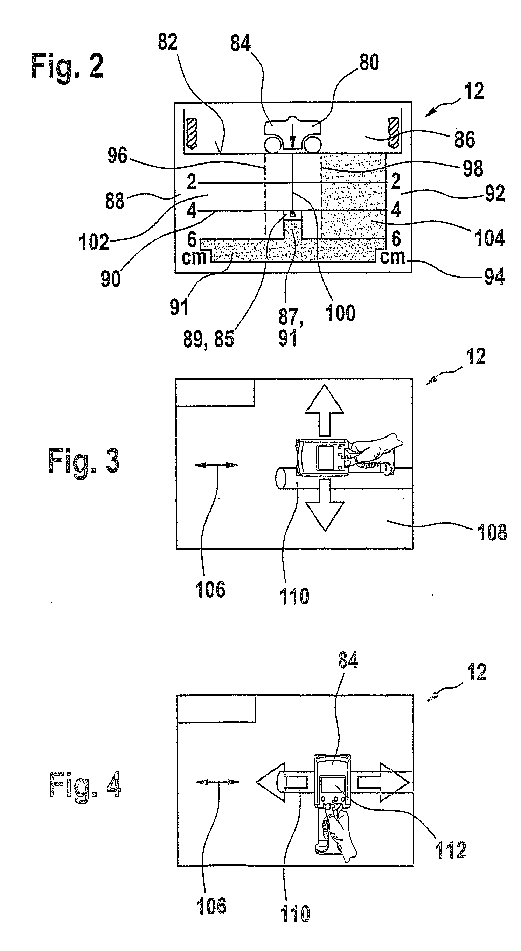

Fig. 2 gibt ein exemplarisches Einzelbild der auf dem optischen Display 12 des Meßgerätes dargestellten Meßergebnisse wieder. In der Darstellung der Meßergebnisse zu erkennen sind ein schematisierter Querschnitt 80 des Meßgerätes, wie es auf einer Wandoberfläche 82 aufgesetzt ist. Das das Meßgerät repräsentierende Grafiksymbol 84 wird stets in der Mitte eines ersten Bereichs 86 des Displays 12 dargestellt, so dass beim Verfahren des Meßgerätes über die zu untersuchende Wand, der vom Meßgerät überfahrene Wandbereich in einem zweiten Bereich 88 des Displays 12 des erfindungsgemäßen Meßgerätes in einer Querschnittsdarstellung unter dem Grafiksymbol 84 des Meßgerätes durch läuft.

In dem in Fig. 2 dargestellten Einzelschnittbild wird ein vom Meßgerät erfaßtes Objekt 89 direkt unter dem Meßgerät angezeigt. Die Anzeige der Meßergebnisse ist derart, dass ein Objekt auf dem optischen Display 12 an der Stelle dargestellt wird, die seiner relativen Lage zum Meßgerät in dem vermessenen Untersuchungsgegenstand, beispielsweise einer Gebäudewand entspricht. Neben der relativen Lage des georteten Objektes 89 wird als Meßergebnis auf dem Display 12 auch eine zulässige Bohrtiefe an Hand von Tiefenlinien 90 dargestellt. Die angezeigte, zulässige Bohrtiefe wird von der Auswerteeinheit des erfindungsgemäßen Meßgerätes aus der gemessenen Tiefe des detektierten Objektes in der Wand errechnet. Die Anzeige des optischen Displays 12 verfügt in diesem Messmodus ferner über eine Tiefenskala 92 mit zugehöriger eingeblendeter Maßeinheit 94, so dass die zulässige Bohrtiefe, bzw. die Tiefe es Objektes in der Wand, direkt von der optischen Anzeigevorrichtung abgelesen werden kann.

Ebenfalls dargestellt in der optischen Wiedergabe der Meßergebnisse nach Figur 2 sind zwei Hilfslinien 96 und 98, die die lateralen Außenkanten des Meßgerätes symbolisieren und so eine Zuweisung der relativen Orientierung des im Display 12 angezeigten georteten Objektes 89 zur Lage des Meßgerätes ermöglichen. Der laterale Abstand zwischen den beiden Hilfslinien 96 und 98 auf dem Display entspricht der Breite des realen Messgerätes und damit in etwa einem Abstand von 100 mm auf dem realen Untersuchungsgegenstand, so dass der optischen Anzeige der Meßergebnisse auch direkt Informationen über die laterale Ausdehnung des detektierten Objektes entnommen werden können. Eine dritte Hilfslinie 100, die auf dem Display 12 des Meßgerätes eingeblendet wird, entspricht der Mittellinie des Meßgerätes, wie sie auch am Gehäuse 10 durch eine Kerbe 64 in der Stirnseite 56 (siehe Figur 1) des Gehäuses 10 kenntlich gemacht ist. An Hand der Kerbe 64 im Gehäuse 10 des Meßgerätes ist eine Markierung direkt auf der untersuchten Wand möglich, so dass beispielsweise Informationen über die genaue Lage des aufgefundenen Objektes auf die Wand übertragen werden können.

Die vom Meßgerät erfaßten Objekte, wie beispielsweise eine Wasserrohrleitung in einer Wand, werden in Form von standardisierten Grafiksymbolen 85 in das Schnittbild der Displaywiedergabe eingeblendet, wobei die Grafiksymbole 85 entsprechend ihrer tatsächlichen Lage im Untersuchungsgegenstand korrekt in dem Schnittbild angeordnet sind. Werden bei dem verwendeten Ortungsprinzip Wandbereiche 87 hinter einem georteten Objekt von diesem abgeschattet, so dass diese Wandbereiche 87 für das Meßsignal des Meßgerätes nicht zugänglich sind, so werden diese vom detektierten Objekt abgeschatteten Bereiche der untersuchten Wand in der Schnittbilddarstellung der Wand auf der optischen Anzeigevorrichtung 12 des erfindungsgemäßen Meßgerätes als graue Fläche 91 gekennzeichnet.

Ebenfalls als graue Fläche 91 gekennzeichnet werden Bereiche in der Wand, deren Tiefe so groß ist, dass eine zuverlässige Messung mit dem Meßgerät nicht mehr möglich ist. So ist entsprechend der Darstellung in Fig. 2 eine Aussage über Bohrtiefen, die größer als 6 cm sind, über den gesamten, vom Meßgerät abgefahrenen Wandbereich nicht möglich und in der Anzeige der Messergebnisse entsprechend als graue Fläche 91 gekennzeichnet.

Ein bereits vom Meßgerät überfahrener Wandbereich in dem sich keinerlei geortete Objekte befinden, wird durch eine helle Farbe, beispielsweise die weiße Darstellung 102 in Fig. 2 auf dem Display kenntlich gemacht. Ebenfalls kenntlich gemacht und in der optischen Anzeige des Meßgerätes dargestellt wird auch derjenige Wandbereich 104, der von dem Meßgerät noch nicht überfahren worden ist. Ein solcher Bereich ist in Fig. 2 als graue Fläche 104 rechts unterhalb des Grafiksymbols 84 des Meßgerätes dargestellt.

Fig. 2 stammt somit, aus einem Meßvorgang, bei dem das erfindungsgemäße Meßgerät von links nach rechts über eine Wand gefahren wurde. Die Hilfslinie 98 im zweiten Bereich 88 des optischen Displays 12 des Meßgerätes markiert den Punkt auf der zu untersuchenden Wand, bis zu dem das Meßgerät mit seiner Gehäusekante 66 (siehe Fig. 1) verfahren worden ist.

Neben der zuvor beschriebenen optischen und ggf. auch akustischen Wiedergabe von Meßergebnissen ist für das beschriebenen Meßgerät erfindungsgemäß vorgesehen, dass über das optische Display 12 eine Bedienungsanleitung für den Anwender abrufbar und darstellbar ist. Die Bedienungsanleitung kann beispielsweise über ein Bedienelement 36, 38,40 gestartet werden und als animierte Filmsequenz, die die wesentlichen Aspekte einer erfolgreichen Bedienung des Meßgerätes darstellt, auf dem optischen Display 12 des Meßgerätes wiedergegeben werden. Die optische Darstellung der Bedienungsanleitung über das Display des Meßgerätes kann zusätzlich durch einen akustischen Kommentar unterstützt werden.

Der Start der Bedienungsanleitung kann beispielsweise auch automatisch, z.B. direkt nach dem Einschalten des Gerätes, oder aber wie beschrieben auf Wunsch des Anwenders per Knopfdruck erfolgen. So kann beispielsweise über eine durch die Bedienelemente 36, 38 oder 40 gesteuerte Menüstruktur der Wiedergabe der Bedienungsanleitung gezielt auf zusätzliche Informationen zu speziellen Details der Handhabung des Meßgerätes zurückgegriffen werden. Die Menüstruktur der gespeicherten Bedienungsanleitung erlaubt damit sozusagen ein Blättern in den verschiedenen Kapiteln der Bedienungsanleitung. Der Anwender ist nicht gezwungen, jedes Mal die ganze Animation laufen zu lassen, sondern kann sich in vorteilhafter Weise weiterführende Informationen zu speziellen Meßproblemen in die optische Anzeige 12 des Meßgerätes laden.

Fig. 3 und Fig. 4 zeigen jeweils ein Einzelbild der Bedienungsanleitung, das dem Anwender die richtige Handhabung des Gerätes beim Abscannen eines Wandbereiches vermittelt. Durch eine zusätzliche Textausgabe bzw. durch einen gesprochenen Begleittext kann die Informationsdichte der über das Display des erfindungsgemäßen Meßgerätes dargestellten Bedienungsanleitung weiter erhöht werden.

Fig. 3 zeigt die Darstellung eines Meßvorganges auf dem optischen Display 12 des Meßgerätes bei dem das Meßgerät quer zur Vorzugsrichtung 106 eines in einer Wand 108 eingeschlossenen Objektes 110 bewegt wird. Fig. 4 zeigt ein auf dem optischen Display 12 des erfindungsgemäßen Meßgerätes wiedergegebenes Einzelbild aus der Bedienungsanleitung, bei dem dargestellt ist, wie das Meßgerät entlang der Vorzugsrichtung 106 eines eingeschlossenen Gegenstandes 110 bewegt wird. Im Gegensatz zu der in Fig. 3 symbolisierten Messung liefert eine Messung der Art, wie sie in Fig. 4 dargestellt ist keinerlei verwertbare Meßergebnisse, wie der Anwender beispielsweise dem dargestellten Display 112 des Grafiksymbols 84 des Meßgerätes entnehmen kann.

In vorteilhafter Weise kann vorgesehen sein, dass das Display beim Scannen einer Wand in orthogonalen Richtungen auch jeweils seine Anzeige um 90 Grad dreht, so dass der Anwender sowohl die Messergebnisse als auch die über das Display wiedergegebenen Benutzerhinweise besser lesen kann.

Neben den typischen in einer Bedienungsanleitung aufgeführten Informationen, wie beispielsweise der Beschreibung der Inbetriebnahme des Gerätes, der ordnungsgemäßen Durchführung eines Meßvorgangs sowie den Sicherheits- und Wartungshinweisen, wie sie an Hand der Fig: 3 und der Fig. 4 stellvertretend dargestellt sind, ermöglicht das erfindungsgemäße Meßgerät darüber hinaus über das optische Display 12 eine kontextsensitive Benutzerführung für den Anwender.

Eine kontextsensitive Benutzerführung blendet abhängig vom jeweiligen Bedienzustand Bedienhinweise ein. Zusätzlich können im aktuellen Kontext unnötige oder gar zu Fehlbedienungen führende Bedienoptionen aus dem Display ausgeblendet werden. Die Hinweise können in Form von einfachen Symbolen (siehe beispielsweise Fig. 2, Fig. 3, Fig. 4) oder aber auch in Form vollflächiger Animationssequenzen oder kurzer Einspielfilme zu verschiedenen, speziellen Themen dargestellt werden. Der Benutzer kann somit gezielt an Fehlbedienungen gehindert werden und wird zudem nicht durch überflüssige Bedienoptionen abgelenkt.

In vorteilhafter Weise läßt sich zur Darstellung kontextsensitiver Benutzerhinweise ein optisches Display in Form eines pixelorientierten LCDs nutzen, welches über einen Grafikcontroller mit internem oder externen Grafikspeicher angesteuert wird. Ein solcher Grafikcontroller kann sich auf der Hauptplatine in der Nähe des Hauptprozessors befinden oder aber er kann auch in das Displaymodul selbst integriert sein. Möglich ist ein Hauptprozessor, der die Bilddaten zur Darstellung der animierten Filmsequenzen ständig neu berechnet, so dass zwar wenig Speicherplatz aber ein leistungsfähiger Prozessor notwendig ist, oder alternativerweise werden vorgefertigte Bilder lediglich in einen Videospeicher kopiert, so dass der Prozessor langsamer sein kann, aber auch deutlich mehr Speicherplatz benötigt.

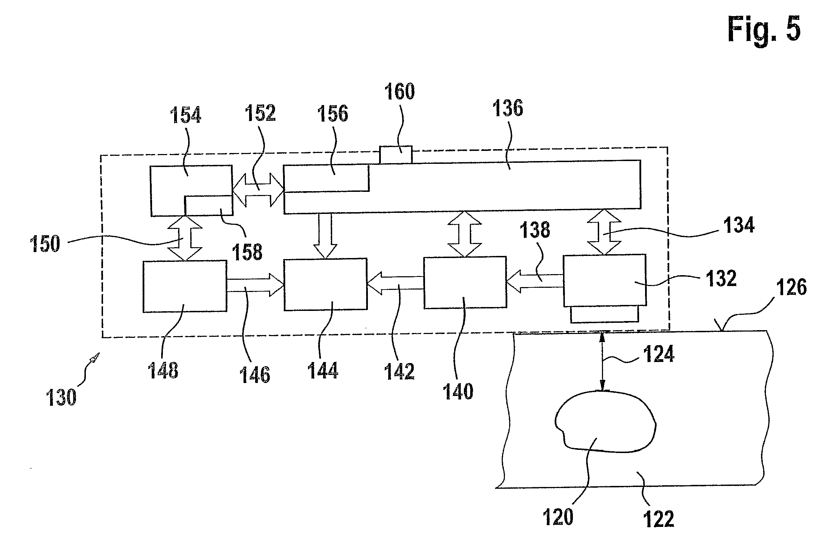

Fig. 5 zeigt ein vereinfachtes Blockschaltbild eines erfindungsgemäßen Meßgerätes, welches weitgehend herkömmlich aufgebaut ist und deshalb im Folgenden nur kurz beschrieben werden soll.

Das erfindungsgemäße Meßgerät in der Ausführungsform der Fig. 5 ist im Speziellen ein Ortungsgerät zur Detektion von Einschlüssen in Wänden, Decken und/oder Böden und ermöglicht die Vermessung eines Objektes 120 in einem Untersuchungsgegenstand 122 der beispielsweise eine Gebäudewand sein kann. Das Objekt 120 selbst kann dabei eine Rohrleitung sein, die in einem Abstand 124 von der Oberfläche 126 der Gebäudewand angeordnet ist und deren Abstand von der Oberfläche der Wand zu bestimmen ist, um beispielsweise ein sicheres Bohren zu gewährleisten.

Das Meßgerät weist an seiner dem Untersuchungsgegenstand 122 zugewandten Unterseite 130 eine Sensorvorrichtung 132 auf, die es ermöglicht Ortsinformationen über das im Untersuchungsgegenstand 122 eingeschlossene Objekt 120 relativ zum Meßgerät zu gewinnen. Auf das der Ortung zugrunde liegenden Verfahren, das nicht Gegenstand dieser Anmeldung ist, soll hier nicht weiter eingegangen werden. Die Steuerung für die Sensorvorrichtung 132 sowie für weitere Komponenten des Meßgerätes erfolgt durch eine zentrale Steuer- und Auswerteeinheit 136 die über Verbindungsmittel 134 mit der Sensorvorrichtung 132 verbunden ist. An diese Steuer- und Auswerteeinheit werden beispielsweise auch Weginformationen, die beim Verfahren des Messgerätes über den Untersuchungsgegenstand 122 aufgenommen werden, weitergeleitet.

Die von der Sensorvorrichtung 132 erfaßten Meßdaten werden während der Messung laufend über eine Echtzeitverbindung 138 an eine Auswerteeinheit 140 weitergeleitet und von dieser zusammen mit der zentralen Steuer- und Auswerteeinheit 136 verarbeitet. Aus den Meßdaten wird die Lage des georteten Objektes 120 relativ zum Meßgerät bestimmt und ein Schnittbild durch den Untersuchungsgegenstand 122 errechnet. Dieses Schnittbild wird von der Auswerteeinheit 140 noch während der Messung laufend über eine weitere Echtzeitverbindung 142 an ein optisches Display 144, beispielsweise ein grafisches LCD weitergegeben, wobei das LCD ein Schnittbild des Untersuchungsgegenstandes in der zuvor beschriebenen und in Fig. 2 exemplarisch dargestellten Weise wiedergibt.

Neben der Darstellung der aktuellen Meßwerte kann über das optische Display 144 in beschriebener Weise auch eine Bedienungsanleitung für das Meßgerät bzw. eine kontextsensitive Benutzerführung des Gerätes eingespielt werden. Aus diesem Grunde ist das optische Display 144 über Verbindungsmittel 146 mit einem Grafik- oder Videocontroller 148 verbunden. Der Grafik- oder Videocontroller 148 wiederum steht über Verbindungsmittel 150 beziehungsweise 152 mit einem Speicherelement 154 bzw. einem Hauptprozessor 156 zur Bildverarbeitung in Verbindung. Das Speicherelement 154 kann auch mit dem Hauptprozessor 156 geteilt werden oder direkt in einem Videocontroller integriert sein.

Der Grafik- oder Videocontroller 148 kann sich, wie in Fig. 5 angedeutet, auf der Hauptplatine in der Nähe des Hauptprozessors 156 befinden, Bestandteil des Hauptprozessors sein oder direkt in das Displaymodul integriert sein. Der Hauptprozessor 156 liefert neben der Bilderzeugung und -verarbeitung der für die kontextsensitive Benutzerführung benötigten Bilddaten auch die bildliche Darstellung der Messergebisse. Dabei wird dann jeder Bildpunkt vom Hauptprozessor im einem Videospeicher abgelegt, wobei es egal ist, ob es sich dabei um Messergebnisse handelt oder Filmsequenzen der Benutzerführung. Der Grafikcontroller liest in einem festgelegten Zeitintervall den Speicher aus, zerlegt die Daten in für die Displaytreiber adequate Informationspakete und versendet diese zusammen mit geeignet erzeugten Timinginformationen (Bild-, Zeilen-, Pixeltakt, etc...) an das LCD.

Der Hauptprozessor 156 kann die für die kontextsensitive Benutzerführung benötigten Bilddaten beispielsweise ständig neu berechnen oder aber vorgefertigte Bilder lediglich in einen optionalen Videospeicher kopieren. Das erfindungsgemäße Meßgerät besitzt ferner eine Schnittstelle 160 über die zusätzliche Daten eingespielt werden können, bzw. Informationen oder auch animierte Filmsequenzen der kontextsensitiven Benutzerführung ausgelesen werden können.

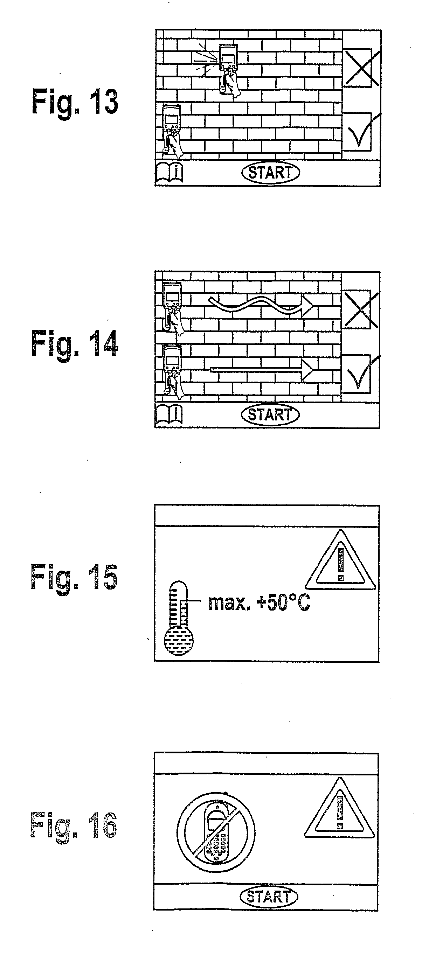

Ein wesentlicher Vorteil eines solchen grafischen Displays liegt darin, dass die Anzeigeinhalte nicht vordefiniert in das Display eingeschrieben sein müssen, sondern frei programmierbar sind. Somit können die Bedienhinweise beispielsweise auf der gesamten Displayfläche dargestellt werden, wobei nicht benötigte Informationen aus dem Display des Meßgerätes ausgeblendet werden können. Ist beispielsweise die Umgebungstemperatur zu hoch, so wird die aktuelle Darstellung der Meßergebnisse, wie sie beispielsweise exemplarisch in Fig. 2 dargestellt ist, aus dem Display 12 ausgeblendet, und es erscheint ein Warnhinweis auf die erhöhte Temperatur vollflächig im Display, wie dies beispielsweise der Fig. 15 entnommen werden kann. Die aufgrund der erhöhten Temperatur mit einem Fehler gemessenen Werte sind nicht aussagekräftig, so dass auf ihre Anzeige unter Bevorzugung des deutlichen Wahnhinweises verzichtet werden kann. Nähert sich die Temperatur im Laufe einer Messung langsam aber stetig einem kritischen Wert an, der eine zuverlässige Messung nicht mehr ermöglichen würde, so wird der Anwender frühzeitig durch ein kleines entsprechendes Symbol, das in das aktuelle Messdisplay eingeblendet wird, darauf hingewiesen.

Fig. 16 zeigt ein weiteres Beispiel einer über das optische Display des erfindungsgemäßen Meßgerätes übermittelten Fehlermeldung bzw. Funktionsstörung des Gerätes. Ist eine Messung aufgrund von äußeren Einflüssen beispielsweise durch Mobilfunksendemasten, Mobilfunktelefonen oder auch andere sendende Geräte nicht mit der erforderlichen Genauigkeit möglich, so wird eine Wiedergabe der Meßergebnisse über das optische Display, wie sie beispielsweise exemplarisch in Fig. 2 angedeutet ist, abgebrochen und an Stelle der aktuellen Messbilddarstellung zeigt das optische Display die in Fig. 16 dargestellten Warnhinweise und fordert den Anwender auf, die Störeinflüsse, wenn möglich, abzuschalten und eine neue Messung durch Drücken der Starttaste zu initiieren.

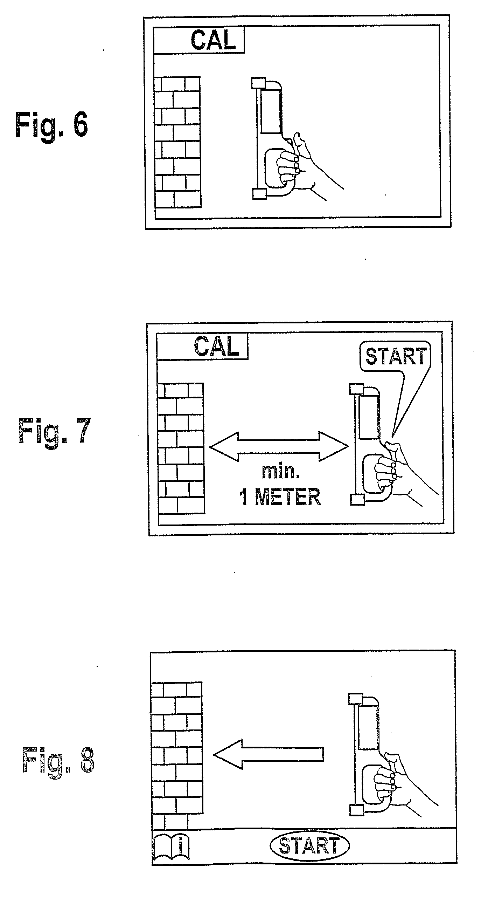

In den Figuren 6 bis 8 ist als ein Beispiel einer kontextsensitiven Benutzerführung der Vorgang der Kalibrierung des Meßgerätes an Hand von drei Einzelbildern aus der zugehörigen, animierten Filmsequenz, wie sie auf dem Display 12 des erfindungsgemäßen Meßgerätes abläuft, dargestellt. Das Display 12 des erfindungsgemäßen Meßgerätes informiert in dieser Filmsequenz seinen Benutzer vor Beginn einer Ortungsmessung darüber, dass zuerst eine Kalibrierungsmessung durchzuführen ist. Die einzelnen Verfahrensschritte, die zur Durchführung einer Kalibrierung des Meßgerätes notwendig sind, werden dem Anwender des Meßgerätes in einer animierten Filmsequenz nahegebracht. Der Anwender wird auf diese Weise dazu angeleitet, die richtigen und notwendigen Prozeduren durchzuführen, so dass das Risiko von Fehlmessungen deutlich reduziert ist. So wird beispielsweise der Anwender, wie in Fig. 7 dargestellt, darüber informiert dass er für eine Kalibrierungsmessung das Meßgerät mit einem Mindestabstand von einem Meter zu der zu untersuchenden Wand halten muß und erst dann durch Betätigung des Startknopfes 28 am Gehäuse 10 des Meßgerätes den Kalibrierungsvorgang starten kann. Ebenso wird der Benutzer des Meßgerätes über einen erfolgreich abgeschlossenen Kalibrierungsvorgang informiert und anschließend aufgefordert zur eigentlichen Ortungsmessung das Meßgerät, wie in Fig. 8 dargestellt, auf die Oberfläche der zu untersuchenden Wand aufzusetzen.

Die in den Figuren 6 bis 8 gezeigten Darstellungen sind lediglich exemplarische Einzelbilder einer animierten Filmsequenz, die sich in ihrer Vollständigkeit aus verständlichen Gründen nicht wiedergeben lässt.

Neben der stellvertretend durch die Figuren 6 bis 8 dargestellten Kalibrierungsroutine sind eine Vielzahl von animierten Filmsequenzen geräteintern abgelegt oder aber auch generierbar, die bei Vorliegen einer spezifischen Meßsituation vom Gerät automatisch eingespielt werden bzw. auf direkte Anforderung durch den Benutzer abgerufen werden können und im optischen Display des Meßgerätes dargestellbar sind.

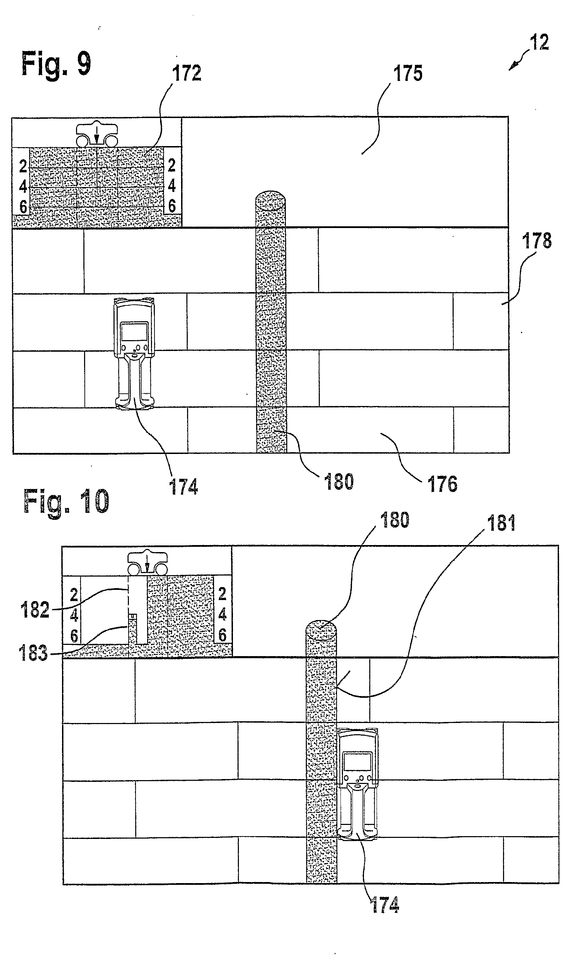

In den Figuren 9 bis 12 ist eine animierte Tricksequenz in einigen stellvertretenden Einzelbildern wiedergegeben, die dem Anwender den eigentlichen Messvorgang und die Darstellung der Messergebnisse nahebringen soll. Das Display 12 des erfindungsgemäßen Messgerätes zeigt bei dieser Animation in einem ersten, oberen Teil 175 des Displays eine verkleinerte, schematische Wiedergabe des Displays im Messmodus (siehe obere linke Ecke in Figur 2), wie es beispielsweise der Darstellung in Figur 2 entspricht.
Diese Darstellung 172 des Messdisplay wird zu Beginn der Animation aus einem symbolisch dargestellten Messgerät 174 herausgezoomt. Im unteren zweiten Teil 176 des Displays 12, wie es in Figur 9 wiedergegeben ist, ist während der Animation der eigentliche Messvorgang graphisch wiedergegeben. Die Darstellung zeigt das symbolische Messgerät 174 auf einer Mauer 178 in der sich ein Gegenstand 180 befindet. In der Animation fährt das symbolische Messgerät 172 nun ausgehend von seiner Position gemäß Figur 9 von links nach rechts über den Gegenstand 180, wobei die Darstellung 172 des Messdisplays im oberen Teil 175 des Displays jeweils gleichzeitig anzeigt, was im Falle eines realen Messvorganges als Messsignal auf dem Display angezeigt würde. Auf diese Weise wird dem Anwender vermittelt, wie bei einer realen Messung ein in einem Untersuchungsgegenstand eingeschlossener Gegenstand auf dem Display 12 des realen Messgerätes wiedergegeben würde.

In Figur 10 befindet sich das Messgerät aus der Animation an einer rechten Kante 181 eines georteten Objektes 180, was in der Darstellung 172 des Messdisplays in der oberen linken Ecke des Displays darin zum Ausdruck kommt, das eine der Gehäusekante 181 zugeordnete Hilflinien 182 durch das grafische Symbol 183 des Objektes verläuft.

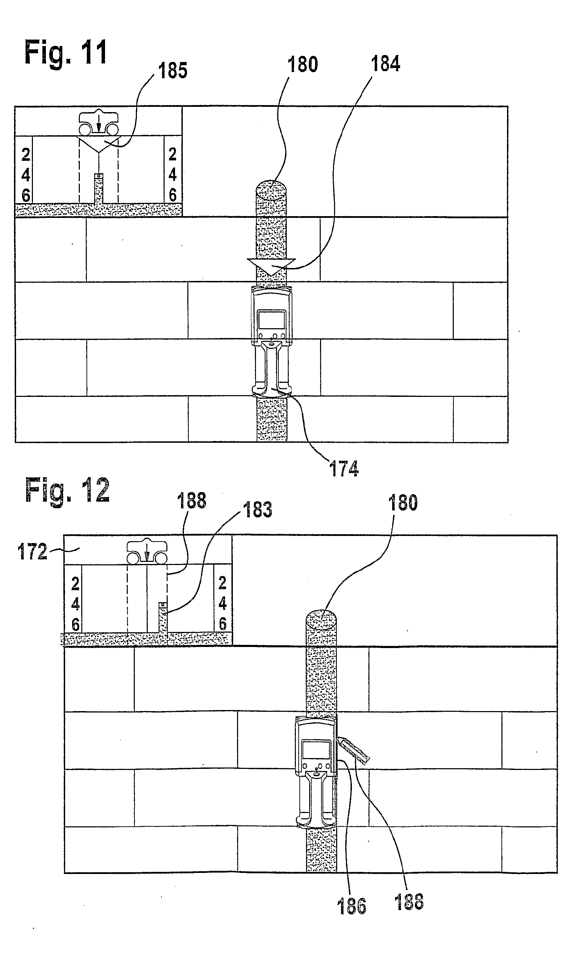

Figur 11 zeigt ein Bild aus der Animation zu dem Zeitpunkt, an dem das symbolische Messgerät 174 mit Hilfe des Messdisplays auf den georteten Gegenstand 180 zentriert worden ist. Durch grafische Symbole, wie beispielsweise einen Pfeil 184, der sich in der Darstellung 172 des Messdisplays als Pfeil 185 wiederfindet, wird dem Anwender der Zusammenhang zwischen der Anzeige im Messdisplay und der zugrundeliegenden konkreten Messsituation verdeutlicht.

Figur 12 zeigt ein exemplarisches Bild aus einem späteren Zeitpunkt der Animation, das dem Anwender vermittelt, wie er die Information über die Lage des georteten Gegenstandes mit Hilfe des Messdisplays des Gerätes auf den Untersuchungsgegenstand übertragen kann. Die einer rechten Gehäusekante 186 entsprechende Hilfsline 188 in der Darstellung 172 des Messdisplays in der oberen linken Ecke des Displays verläuft direkt durch das grafische Symbol 183 des Objektes, so dass ein Anwender des Gerätes in diesem Fall davon ausgehen kann, dass sich die rechte Gehäusekante 186 über dem Objekt 180 befindet. Mit Hilfe der entsprechenden Kante am realen Gehäuse (vergleiche Gehäusekanten 65 und 66 der Figur 1) und einem Markierungsmittel 188 kann die Lage des eingeschlossenen Objektes 180 auf den Untersuchungsgegenstand 176 übertragen werden.

Abschließend seien noch zwei Beispiele aufgeführt, bei denen der Benutzer des Gerätes während eines Messvorganges durch eine entsprechende Informationsausgabe über das optische Diplay des Messgerätes auf bereits eingetretene oder möglicherweise bevorstehende Benutzungsfehler hingewiesen werden kann. Diese Information können vom Messgerät selbst automatisch auf das Display des Gerätes eingespielt werden, wenn entsprechende Sensoren des Gerätes einen Fehler oder auch nur die Gefahr des Auftretens eines Fehlers detektiert haben. Durch einzelne Symbole, Schriften aber auch durch akustische Signale, die auch einen gesprochenen Text umfassen können, wird der Benutzer beispielsweise darüber informiert, eine Messung abzubrechen bzw. neu zu starten. Vorteilhaft ist es, standardisierte Symbole zu benutzen, so dass der Rechenaufwand zur Erzeugung animierter Filmsequenzen, die auf dem Display des erfindungsgemäßen Messgerätes wiedergegeben werden begrenzt werden kann.

Auch Informationshinweise, die es zur Erzielung guter Messergebnisse zu beachten gilt, können über das Display abgerufen oder automatisch dargestellt werden. Die kontextsensitive Benutzerführung ermöglicht über das optische Display des erfindungsgemäßen Meßgerätes unter Anderem beispielsweise eine Weitergabe der Information an den Benutzer, dass das Meßgerät zu schnell über einen Untersuchungsgegenstand verfahren wird, wie dies in Fig. 13 an Hand der schematischen Wiedergabe des Inhalts des Displays 12 des erfindungsgemäßen Meßgerätes bei Auftreten dieses Fehlers dargestellt ist. Auf diese Weise kann der Benutzer vor eventuell auftetenden falschen Messergebnissen gewarnt werden.

Fig. 14 zeigt ein Bild, welches im optischen Display des erfindungsgemäßen Meßgerätes wiedergegeben wird, wenn das Meßgerät nicht geradlinig über den Untersuchungsgegenstand verfahren wird, so dass die Gefahr besteht, dass einzelne Räder des Meßgerätes von der Oberfläche des Untersuchungsgegenstandes abheben, so dass die über die Räder übermittelte Weginformation verloren geht bzw. nicht mehr eindeutig zu ermitteln ist.

Das erfindungsgemäße Meßgerät ist nicht beschränkt auf die in der Zeichnung und der zugehörigen Beschreibung dargestellten Ausführungsbeispiele.

Insbesondere ist das erfindungsgemäße Meßgerät nicht beschränkt auf ein Ortungsgerät zur Detektion von Einschlüssen in Wänden, Decken und/oder Böden. Insbesondere ist der Begriff der Wände, Decken und/oder Böden wie er in diesem Text benutzt wird, ohne jeden ausschließenden Charakter. Vielmehr ist in dieser Reihung eine exemplarische Aufzählung von einigen möglichen Untersuchungsgegenständen zu sehen, die lediglich mögliche Anwendungen eines solchen Meßgerätes illustrieren soll.

In vorteilhafter Weise läßt sich ein erfindungsgemäßes Meßgerät beispielsweise auch im Bereich von Messgeräten einsetzen, die der Entfernungsmessung dienen.

Das erfindungsgemäße Meßgerät ist nicht beschränkt auf die optische beziehungsweise grafische Wiedergabe von Informationen zur Bedienungsanleitung bzw. zur Benutzerführung. In vorteilhafter Weise kann eine solche optische beziehungsweise grafische Darstellung auch durch akustische Informationen unterstützt sein.

## Patentansprüche

1. Handgehaltenes Ortungsgerät zur Detektion von Einschlüssen in Wänden, Decken und/oder Böden, mit mindestens einer Sensorvorrichtung (132), mit Mitteln zur Erzeugung eines Detektionssignals für diese mindestens eine Sensorvorrichtung sowie mit einer Steuer- und Auswerteeinheit (136, 124) zur Ermittlung von Messwerten aus dem Detektionssignal, des Weiteren mit Schaltmitteln (32, 36, 38, 40) zur Bedienung des Gerätes sowie mit einer Ausgabevorrichtung (12, 144) für die ermittelten Messergebnisse, **dadurch gekennzeichnet, dass** eine im Messgerät hinterlegte Online-Bedienungsanleitung vom Messgerät abrufbar ist und über die Ausgabevorrichtung (12, 144) des Gerätes darstellbar ist, die einen Anwender des Messgeräts vor Beginn einer Ortungsmessung darüber informiert, dass zuerst eine Kalibrierungsmessung durchzuführen ist, wobei die einzelnen Verfahrensschritte, die zur Durchführung der Kalibrierungsmessung notwendig sind, dem Anwender in einer animierten Filmsequenz nahegebracht werden.

2. Ortungsgerät nach Anspruch 1, **dadurch gekennzeichnet, dass** über die Ausgabevorrichtung (12,144) des Ortungsgeräts messkontextabhängige Bedienhinweise für das Messgerät darstellbar sind.

3. Ortungsgerät nach Anspruch 2, **dadurch gekennzeichnet, dass** das Ortungsgerät Mittel aufweist, die es ermöglichen, dass die Wiedergabe der Bedienungsanleitung und insbesondere von Informationen der kontextabhängigen Bedienhinweise über die Ausgabevorrichtung (12,144) des Ortungsgeräts menuegesteuert ist.

4. Ortungsgerät nach Anspruch 3, **dadurch gekennzeichnet, dass** zur Menuesteuerung der Wiedergabe von Informationen über die Ausgabevorrichtung (12,144) des Ortungsgeräts die Schaltmittel (32,36,38,40) zur Bedienung des Gerätes nutzbar sind.

5. Ortungsgerät nach Anspruch 1 oder 2, **dadurch gekennzeichnet, dass** das Ortungsgerät Mittel aufweist, die es ermöglichen, dass die Bedienungshinweise nach Einschalten des Ortungsgeräts automatisch über die Ausgabevorrichtung (12,144) des Gerätes wiedergebbar sind.

6. Ortungsgerät nach einem der Ansprüche 1,2 oder 5 **dadurch gekennzeichnet, dass** das Ortungsgerät Mittel aufweist, die es ermöglichen, dass die Bedienungshinweise nach Einschalten des Ortungsgeräts kontextabhängig, das heisst der Messsituation entsprechend, über die Ausgabevorrichtung (12,144) des Ortungsgeräts wiedergegeben werden.

7. Ortungsgerät nach einem der Ansprüche 1 bis 4, **dadurch gekennzeichnet, dass** die Wiedergabe von Bedienungshinweisen nach dem Einschalten des Ortungsgeräts über die Schaltmittel (32,36,38,40) aktivierbar und/oder deaktivierbar ist.

8. Ortungsgerät nach einen der Ansprüche 1 bis 7, **dadurch gekennzeichnet, dass** die Ausgabevorrichtung (12,144) eine optische Anzeigevorrichtung (12,144) ist.

9. Ortungsgerät nach Anspruch 8, **dadurch gekennzeichnet, dass** die optische Anzeigevorrichtung (12,144) ein graphisches LCD (Liquid Crystal Display) ist.

10. Ortungsgerät nach einem der vorhergehenden Ansprüche, **dadurch gekennzeichnet, dass** die Ausgabevorrichtung (12,144) die Wiedergabe von Messergebnissen in graphischer Weise ermöglicht.

11. Ortungsgerät nach einem der Ansprüche Anspruch 8,9 oder 10, **dadurch gekennzeichnet, dass** die optische Anzeigevorrichtung (12,144) derart ausgestaltet ist, dass sie die Wiedergabe von animierten Filmsequenzen erlaubt.

12. Ortungsgerät nach einem der vorhergehenden Ansprüche, **dadurch gekennzeichnet, dass** die über die Ausgabevorrichtung (12,144) des Ortungsgeräts abrufbare Bedienungsanleitung für das Ortungsgerät in einem Speicherelement des Ortungsgeräts abgelegt ist.

13. Ortungsgerät nach einem der vorhergehenden Ansprüche, **dadurch gekennzeichnet, dass** das Ortungsgerät Batterie und/oder Akku betrieben ist.

## Claims

1. Hand-held locating device for detecting enclaves in walls, ceilings and/or floors, having at least one sensor apparatus (132), having means for producing a detection signal for this at least one sensor apparatus and having a control and evaluation unit (136, 124) for ascertaining measured values from the detection signal, furthermore having switching means (32, 36, 38, 40) for operator control of the device and having an output apparatus (12, 144) for the ascertained measurement results, **characterized in that** an online user guide stored in the measuring device is retrievable from the measuring device and is presentable via the output apparatus (12, 144) of the device, which online user guide informs a user of the measuring device, before the start of a locating measurement, that a calibration measurement needs to be performed first, the individual method steps that are necessary for performing the calibration measurement being made accessible to the user in an animated film sequence.

2. Locating device according to Claim 1, **characterized in that** the output apparatus (12, 144) of the locating device renders measurement-context-dependent operating advice for the measuring device presentable.

3. Locating device according to Claim 2, **characterized in that** the locating device has means that allow reproduction of the user guide and particularly of information from the context-dependent operating advice via the output apparatus (12, 144) of the locating device to be menu-controlled.

4. Locating device according to Claim 3, **characterized in that** menu control of the reproduction of information via the output apparatus (12, 144) of the locating device involves the switching means (32, 36, 38, 40) for operator control of the device being usable.

5. Locating device according to Claim 1 or 2, **characterized in that** the locating device has means that allow the operating advice to be reproducible automatically via the output apparatus (12, 144) of the device after the locating device is switched on.

6. Locating device according to one of Claims 1, 2 and 5, **characterized in that** the locating device has means that allow the operating advice to be reproduced on a context-dependent basis, that is to say in accordance with the measurement situation, via the output apparatus (12, 144) of the locating device after the locating device is switched on.

7. Locating device according to one of Claims 1 to 4, **characterized in that** reproduction of operating advice is activable and/or deactivable via the switching means (32, 36, 38, 40) after the locating device is switched on.

8. Locating device according to one of Claims 1 to 7, **characterized in that** the output apparatus (12, 144) is a visual display apparatus (12, 144).

9. Locating device according to Claim 8, **characterized in that** the visual display apparatus (12, 144) is a graphical LCD (liquid crystal display).

10. Locating device according to one of the preceding claims, **characterized in that** the output apparatus (12, 144) allows reproduction of measurement results graphically.

11. Locating device according to one of Claims 8, 9 and 10, **characterized in that** the visual display apparatus (12, 144) is embodied such that it allows reproduction of animated film sequences.

12. Locating device according to one of the preceding claims, **characterized in that** the user guide for the locating device that is retrievable via the output apparatus (12, 144) of the locating device is stored in a memory element of the locating device.

13. Locating device according to one of the preceding claims, **characterized in that** the locating device is battery-operated and/or storage-battery-operated.

## Revendications

1. Appareil de localisation manuel destiné à détecter des inclusions dans des parois, des plafonds et/ou des sols, avec au moins un dispositif de capteurs (132), avec des moyens pour générer un signal de détection pour ledit au moins un dispositif de capteur, ainsi qu'avec une unité de commande et d'évaluation (136, 124) pour déterminer des valeurs de mesure à partir du signal de détection, par ailleurs, avec des moyens de commutation (32, 36, 38, 40) pour manipuler l'appareil, ainsi qu'avec un dispositif d'édition (12, 144) pour les résultats déterminés, **caractérisé en ce qu'**un mode d'emploi en ligne, sauvegardé dans l'appareil de mesure peut être interrogé par l'appareil de mesure et peut être représenté via le dispositif d'édition (12, 144) qui informe un utilisateur de l'appareil de mesure, avant le début d'une mesure de localisation qu'il faut d'abord procéder à une mesure de calibrage, les étapes individuelles du procédé qui sont nécessaires pour procéder à la mesure de calibrage étant suggérées à l'utilisateur dans une séquence de film animée.

2. Appareil de localisation selon la revendication 1, **caractérisé en ce que** via le dispositif d'édition (12, 144) de l'appareil de localisation, des consignes de manipulation dépendant du contexte de mesure peuvent être représentées pour l'appareil de mesure.

3. Appareil de localisation selon la revendication 2, **caractérisé en ce que** l'appareil de localisation comporte des moyens qui permettent que la reproduction du mode d'emploi et notamment d'informations des consignes de manipulation dépendant du contexte soit commandée par menu via le dispositif d'édition (12, 144) de l'appareil de localisation.

4. Appareil de localisation selon la revendication 3, **caractérisé en ce que** pour la commande par menu de la reproduction d'informations via le dispositif d'édition (12, 144) de l'appareil de localisation, les moyens de commutation (32, 36, 38, 40) peuvent être utilisés pour la manipulation de l'appareil.

5. Appareil de localisation selon la revendication 1 ou la revendication 2, **caractérisé en ce que** l'appareil de localisation comporte des menus qui permettent qu'après la mise en route de l'appareil de localisation, les consignes de manipulation soient reproductibles automatiquement via la dispositif d'édition (12, 144) de l'appareil.

6. Appareil de localisation selon l'une quelconque des revendications 1, 2 ou 5, **caractérisé en ce que** l'appareil de localisation comporte des moyens qui permettent qu'après la mise en route de l'appareil de localisation, les consignes de manipulation soient reproduites en fonction du contexte, c'est-à-dire en correspondance avec la situation de mesure via le dispositif d'édition (12, 144) de l'appareil de localisation.

7. Appareil de localisation selon l'une quelconque des revendications 1 à 4, **caractérisé en ce que** la reproduction de consignes de manipulation après la mise en route de l'appareil de localisation est activable et/ou désactivable par l'intermédiaire des moyens de commutation (32, 36, 38, 40).

8. Appareil de localisation selon l'une quelconque des revendications 1 à 7, **caractérisé en ce que** le dispositif d'édition (12, 144) est un dispositif d'affichage (12, 144) optique.

9. Appareil de localisation selon la revendication 8, **caractérisé en ce que** le dispositif d'affichage (12, 144) optique est un LCD (Liquid Crystal Display) graphique.

10. Appareil de localisation selon l'une quelconque des revendications précédentes, **caractérisé en ce que** le dispositif de localisation (12, 144) permet la reproduction de résultats de mesure de manière graphique.

11. Appareil de distribution selon l'une quelconque des revendications 8, 9, ou 10, **caractérisé en ce que** le dispositif d'affichage (12, 144) optique est conçu de sorte à permettre la reproduction de séquences de film animées.

12. Appareil de localisation selon l'une quelconque des revendications précédentes, **caractérisé en ce que** le mode d'emploi pour l'appareil de localisation interrogeable via le dispositif d'édition (12, 144) de l'appareil de localisation est sauvegardé dans un élément de mémoire de l'appareil de localisation.

13. Appareil de localisation selon l'une quelconque des revendications précédentes, **caractérisé en ce que** l'appareil de localisation fonctionne sur batterie et/ou sur accu.
